**Europäisches Patentamt**

**European Patent Office**

**Office européen des brevets**

(19)

(11) Veröffentlichungsnummer: **0 082 948**

**A1**

(12) # EUROPÄISCHE PATENTANMELDUNG

(21) Anmeldenummer: **82110564.0**

(22) Anmeldetag: **16.11.82**

(51) Int. Cl.³: **B 01 D 53/04**
**C 01 B 21/04**

(30) Priorität: **21.11.81 DE 3146189**

(43) Veröffentlichungstag der Anmeldung:
**06.07.83 Patentblatt 83/27**

(84) Benannte Vertragsstaaten:
**BE DE FR GB IT NL SE**

(71) Anmelder: **Leybold-Heraeus GmbH**
**Bonner Strasse 504 Postfach 51 07 60**
**D-5000 Köln 51(DE)**

(72) Erfinder: **Amlinger, Heinrich, Ing. grad.**
**Johann-Schmidt-Strasse 12**
**D-6361 Niddatal 2(DE)**

(74) Vertreter: **Leineweber, Jürgen**
**Leybold-Heraeus GmbH Bonner Strasse 504 Postfach 51**
**07 60**
**D-5000 Köln 51(DE)**

(54) **Verfahren zum Betrieb einer Druckwechselanlage und nach diesem Verfahren arbeitende Druckwechselanlage.**

(57) Bei einem Verfahren zum Betrieb einer Druckwechselanlage zur Herstellung von technisch reinem Stickstoff aus Luft sowie bei einer nach diesem Verfahren betriebenen Anlage sind für die Versorgung der Adsorber (1, 2) mit Luft sowie für die Erzeugung und Aufrechterhaltung eines Adsorptionsdruckes von vorzugsweise 1,8 bar eine Rootsgebläse-Einrichtung (3) und für die Erzeugung eines Desorptionsenddruckes von vorzugsweise 85 mbar eine Rootspumpen-Einrichtung (7) vorgesehen.

EP 0 082 948 A1

./...

Stickstoff Produkt

Luft-Einlaß

Sauerstoffreiche
Fraktion

LEYBOLD-HERAEUS GMBH
Köln-Bayental

Verfahren zum Betrieb einer Druckwechselanlage und nach diesem Verfahren arbeitende Druckwechselanlage

Die Erfindung bezieht sich auf ein Verfahren zum Betrieb einer der Herstellung von Stickstoff aus Luft dienenden Druckwechselanlage, deren Adsorber wechselweise im Adsorptionsbetrieb bei Überdruck und im Desorptionsbetrieb bei Unterdruck arbeiten. Außerdem bezieht sich die Erfindung auf eine nach diesem Betriebsverfahren arbeitende Druckwechselanlage. Mit Anlagen dieser Art kann Stickstoff mit einer Reinheit von 97 bis 99,9 % hergestellt werden.

Druckwechselanlagen sind z. B. aus der DE-PS 15 44 152 und 24 41 447 bekannt. Sie umfassen vorzugsweise zwei Adsorber, die wechselweise in Adsorptions- und Desorptionsphase betrieben werden. In der Adsorptionsphase lagert sich Sauerstoff an dem Adsorptionsmittel an. Daran schließt sich die Regenerations- bzw. Desorptionsphase an, in der das Adsorptionsmittel vom Sauerstoff befreit wird.

Bisher war man allgemein der Ansicht, daß ein wirtschaftlich optimaler Betrieb derartiger Anlagen relativ hohe Adsorptionsdrücke voraussetzt. Bekannte Anlagen arbeiten deshalb mit Adsorptionsdrücken von 3,5 bar und mehr. Zur Erzeugung dieser Drücke sind kostspielige ölfreie Kompressoren erforderlich. Weiterhin ist nachteilig, daß zur Erzielung des vorzugsweise unter Atmosphärendruck liegenden Desorptionsdruckes Vakuumpumpsätze mit hohen Saugvermögen erforderlich sind. Gebräuchlich ist deshalb die Verwendung von Wasserringpumpen, die bei relativ hohen Drücken ein hohes Saugvermögen haben. Dieses nimmt jedoch zum Enddruck hin relativ früh sehr stark ab.

Der vorliegenden Erfindung liegt die Aufgabe zugrunde, ein Verfahren zum Betrieb einer Druckwechselanlage der eingangs genannten Art sowie eine nach diesem Verfahren arbeitende Druckwechselanlage mit erheblich verbesserter Wirtschaftlichkeit - sowohl hinsichtlich der Anlage- als auch der Betriebskosten - zu schaffen.

Erfindungsgemäß wird diese Aufgabe dadurch gelöst, daß der mittels einer Rootsgebläse-Einrichtung erzeugte Adsorptionsdruck 1 bis 2,5 bar und der mittels einer Rootspumpen-Einrichtung erzeugte Desorptionsenddruck 10 bis 200 mbar beträgt. Infolge eines derart niedrigen Adsorptionsdruckes ist der Einsatz von Rootsgebläsen möglich, die im Vergleich zu ölfreien Kolbenverdichtern wesentlich preiswerter sind. Eine weitere Folge des niedrigen Adsorptionsdruckes ist ein wirtschaftlicherer Betrieb der Anlage, da die aufzuwendende Kompressionsenergie wesentlich geringer ist. Auch die Einsatzluftmenge ist geringer. Z. B. verringert sich diese bei einer Anlage, die mit 1,8 bar Adsorptionsdruck betrieben wird im Vergleich zu einer Anlage mit 3,5 bar Atmosphärendruck um 30 %, was sich in einer Verkleinerung der Leistung des Gebläses und auch der Vakuumpumpe bemerkbar macht. Die gewählten Drücke haben schließlich den Vorteil, daß beim Umschalten der Behälter von Adsorption auf Desorption bzw. umgekehrt, dem ein Druckausgleich vorhergeht, im zu regenerierenden Behälter bereits ein leichter Unterdruck entsteht, so daß ein Vakuumpumpsatz mit relativ geringer Leistung verwendet werden kann.

Als besonders vorteilhaft hat sich ein Betriebsverfahren ergeben, bei dem mittels eines einstufigen Rootsgebläses ein Adsorptionsdruck von ca. 1,8 bar und mittels einer zweistufigen Rootspumpe ein Desorptionsdruck von ca. 85 mbar erzeugt wird. Bei Anlagen, die wenige 100 $m^3$ Stickstoff pro Stunde liefern sollen, hat sich eine Betriebsweise mit diesen Daten als energetisch besonders günstig erwiesen.

Eine zur Durchführung des erfindungsgemäßen Betriebs- verfahrens geeignete Druckwechselanlage weist zweckmäßiger- weise zur Versorgung der Adsorber mit Luft ein ein- oder zweistufiges Rootsgebläse und zur Erzeugung des Desorptions- druckes eine zweistufige Rootspumpe auf.

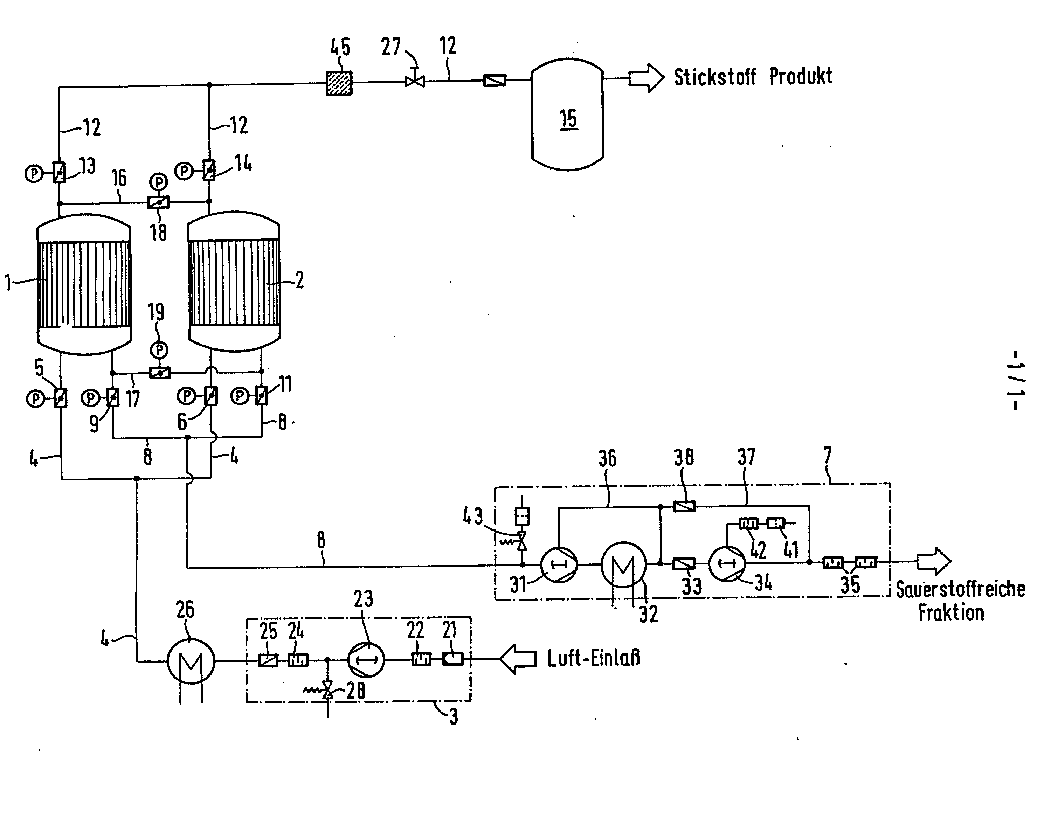

Weitere Vorteile und Einzelheiten sollen anhand des in der Figur dargestellten Fließschemas für ein Ausführungsbeispiel einer Druckwechselanlage nach der ERfindung erläutert werden.

Das in der Figur dargestellte Ausführungsbeispiel für eine erfindungsgemäße Druckwechselanlage besteht im wesentlichen aus den zwei Adsorbern 1 und 2, denen mittels der Rootsgebläse-Einrichtung 3 wechselweise über die Einlaßleitungen 4 mit den Ventilen 5 und 6 Luft zugeführt wird. Außerdem dient die Rootsgebläse-Einrichtung 3 der Erzeugung und Aufrechterhaltung des gewünschten Adsorptionsdruckes.

Zur wechselweisen Evakuierung der Adsorber 1 und 2 in der Desorptions- oder Regenerationsphase dient die Rootspumpen- Einrichtung 7, die über die Leitungen 8 mit den Ventilen 9 und 11 die sauerstoffreiche Fraktion aus den Adsorbern 1 und 2 absaugt und den gewünschten Desorptionsdruck erzeugt. Über die Leitungen 12 mit den Ventilen 13 und 14 erfolgt die Stickstoff-Entnahme aus den Adsorbern und die Zuführung zu einem Pufferbehälter 15. Mit Hilfe der Leitungsabschnitte 16 und 17 mit den Ventilen 18 und 19 können die beiden Adsorber 1 und 2 zwecks Druckausgleichs miteinander verbunden werden.

Die der Zuführung von Luft zu den Adsorbern 1 und 2 sowie der Erzeugung des Adsorptionsdruckes dienende Rootsgebläse- Einrichtung 3 umfaßt - in Richtung der strömenden Luft gesehen - ein Filter 21, einen Schalldämpfer 22, das einstufige Rootsgebläse 23, einen weiteren Schalldämpfer 24 und ein Ventil 25. Weiterhin ist in der Gaseinlaßleitung 4 ein vorzugsweise mit Wasser als Kühlmittel arbeitender Kühler 26 angeordnet, der die - beim vorliegenden Ausführungs- beispiel auf 1,8 bar verdichtete - Luft zurückkühlt. Die Einstellung dieses Druckes erfolgt mit Hilfe der Drossel 27 in der Produktentnahmeleitung 12, so daß in dem jeweils auf Adsorption geschalteten Adsorber 1 und 2 der gewünschte Druck von 1,8 bar aufrechterhalten wird. Die Rootsgebläse-Einrichtung 3 ist noch mit einem Überströmventil 28 ausgerüstet, das die Druckseite des Rootsgebläses 23 bei einem unerwünschten, z. B. durch eine Störung in der Anlage verursachten Überdruck mit der Atmosphäre verbindet.

Die Rootspumpen-Einrichtung 7 besteht - in Strömungsrichtung der Gase gesehen - aus der ersten Stufe 31 der zweistufigen Rootspumpe, einem Zwischenkühler 32, einem Ventil 33, der zweiten Stufe 34 der zweistufigen Rootspumpe und zwei Schalldämpfern 35. Über die Leitung 36 wird ein Teil der im Kühler 32 gekühlten Gase der ersten Stufe 31 wieder zugeführt, so daß diese im gekühlten Voreinlaßbetrieb arbeitet. Fördert die erste Stufe 31 eine zu hohe, nicht mehr von der zweiten Stufe 34 zu verkraftende Gasmenge, dann wird der Überschuß über die Leitung 37 mit dem Ventil 38 direkt der Druckseite der zweiten Stufe 34 zugeführt. Die Kühlung der zweiten Stufe 34 erfolgt im Voreinlaßbetrieb mittels Luft, die über ein Filter 41 und einen Schalldämpfer 42 der Stufe 34 zugeführt wird.

Der Eintrittsseite der ersten Stufe 31 der zweistufigen Roots- pumpe ist noch ein weiteres Überströmventil 43 zugeordnet. Es öffnet bei einem bestimmten Überdruck, so daß Druckschläge auf die Rootspumpe vermieden sind.

Die beschriebene Anlage arbeitet zweckmäßigerweise mit einer Gesamtzykluszeit (Adsorption, Desorption, Druckausgleich, Druckaufbau) von ca. 2 x 60 sec. Dabei entfallen auf den

0082948

Druckausgleich ca. 5 sec. Dieser Druckausgleich wird vorgenommen, wenn die wechselweise erfolgende Umschaltung von Adsorption auf Desorption (in dem einen Adsorber) bzw. von Desorption auf Adsorption (in dem anderen Adsorber vorgenommen wird. In beiden Adsorbern entsteht nach diesem Druckausgleich ein leichter Unterdruck von ca. 940 mbar, was für beide Einrichtungen 3 und 7 ein günstiger Ausgangsdruck ist.

Die Steuerung und Umschaltung der Anlage erfolgt in an sich bekannter Weise mit Hilfe der dargestellten Ventile über eine nicht dargestellte Steuerzentrale. Die Ventile sind zweckmäßigerweise als Klappenventile oder Absperrklappen ausgebildet.

Um in einem der beiden Adsorber 1 oder 2 nach seiner Umschaltung auf die Adsorptionsphase den Adsorptionsdruck in der gewünschten Zeit von 10 bis 20 sec erzeugen zu können, ist in der Produktentnahmeleitung ein Ventil 44 (hinter der Drossel 27) angeordnet. Dieses wird zu Beginn der Adsorptionsphase für einige Sekunden (3 bis 4 sec) geschlossen, so daß das Rootsgebläse 3 für kurze Zeit gegen ein geschlossenes System arbeitet. Dadurch tritt zunächst eine rasche Druckerhöhung auf ca. 1 bar ein. Nach dem Öffnen dieses Ventils 44 erfolgt der Druckanstieg infolge der Drossel 27 langsamer, und zwar derart, daß er nach ca. 15 sec den gewünschten Wert von 1,8 bar erreicht hat.

Der Drossel 27 vorgelagert ist noch ein Filter 45. Dieses dient einer Reinigung des Produktgases und hat ebenfalls eine schwache Drosselwirkung. Deshalb ist es zweckmäßig, es in unmittelbarer Nähe vor der Drossel 27 anzuordnen.

Das Saugvermögen der Rootspumpen-Einrichtung 7 ist so bemessen, daß der gewünschte Desorptionsenddruck von ca. 85 mbar nach Ablauf der Desorptionszeit mit Sicherheit erreicht wird. Die Rootspumpen-Einrichtung 7 hat gegenüber den an dieser Stelle bisher verwendeten Wasserringpumpen den Vorteil, daß ihr Saugvermögen bis nahezu zum Desorptionsenddruck nur geringfügig abnimmt, während das Saugvermögen einer Wasserringpumpe zum Enddruck hin wesentlich stärker abfällt. Üblicherweise wird der Kühler 32 mit Wasser betrieben. Bei einer derartigen zwischengekühlten Rootspumpe ist der Kühlwasserverbrauch wesentlich geringer als der Wasserverbrauch einer Wasserringpumpe.

Das beschriebene Fließschema eignet sich besonders gut für eine Druckwechselanlage, mit der einige 100 $m^3$ Stickstoff pro Sekunde erzeugt werden sollen. Bei einer 100 $m^3$/h-Anlage sind z. B. in jedem der Adsorber 1,5 $m^3$ Adsorptionsmaterial (z. B. Kohlenstoffmolekularsieb der Bergbau-Forschungs-GmbH) enthalten. Die Rootsgebläse-Einrichtung 3 muß ca. 300 $m^3$/h fördern. Die Rootspumpen-Einrichtung 7 hat bei diesen Daten zweckmäßigerweise ein Saugvermögen von 960 $m^3$/h.

LEYBOLD-HERAEUS GMBH
Köln-Bayental

Verfahren zum Betrieb einer Druckwechselanlage und nach
diesem Verfahren arbeitende Druckwechselanlage

ANSPRÜCHE

1. Verfahren zum Betrieb einer der Herstellung von Stickstoff aus Luft dienenden Druckwechselanlage, deren
   Adsorber wechselweise im Adsorptionsbetrieb bei Überdruck
   und im Desorptionsbetrieb bei Unterdruck arbeiten,
   d a d u r c h   g e k e n n z e i c h n e t ,   daß
   der mittels einer Rootsgebläse-Einrichtung (3) erzeugte
   Adsorptionsdruck 1 bis 2,5 bar und der mittels einer
   Rootspumpen-Einrichtung (7) erzeugte Desorptionsenddruck 10 bis 200 mbar beträgt.

2. Verfahren nach Anspruch 1,   d a d u r c h
   g e k e n n z e i c h n e t ,   daß der mittels eines
   einstufigen Rootsgebläses (23) erzeugte Adsorptionsdruck ca. 1,8 bar und der mittels einer zweistufigen
   Rootspumpe (31, 34) erzeugte Desorptionsenddruck ca.
   85 mbar beträgt.

3. Verfahren nach Anspruch 1 oder 2,   d a d u r c h
   g e k e n n z e i c h n e t ,   daß die Anlage so
   bemessen ist und gesteuert wird, daß die Zeit für den
   gesamten Zyklus (Adsorption, Desorption, Druckausgleich
   und Druckaufbau) ca. 2 x 60 sec beträgt, daß der
   Adsorptionsdruck nach 10 bis 20 sec und der Desorptionsenddruck spätestens nach Ablauf der Desorptionszeit
   erreicht wird.

4. Nach einem Verfahren der vorhergehenden Ansprüche betriebene Druckwechselanlage mit mindestens zwei Adsorbern,
   d a d u r c h   g e k e n n z e i c h n e t ,   daß der

der Zuführung der Luft zu den Adsorbern (1, 2) und der Erzeugung des Adsorptionsdruckes dienenden Rootsgebläse-Einrichtung (3) Mittel (27) zur Begrenzung des maximalen Adsorptionsdruckes zugeordnet sind und daß die der Erzeugung des Desorptionsdruckes dienende Rootspumpen-Einrichtung (7) so bemessen ist, daß der gewünschte Desorptionsdruck nach Ablauf der Desorptionszeit erreicht wird.

5. Druckwechselanlage nach Anspruch 4, d a d u r c h  g e k e n n z e i c h n e t ,  daß zur Begrenzung des maximalen Adsorptionsdruckes eine Drossel (27) oder ein Überströmventil vorgesehen ist.

6. Druckwechselanlage nach Anspruch 5, d a d u r c h  g e k e n n z e i c h n e t ,  daß zur Begrenzung des Adsorptionsdruckes eine in der Produktentnahmeleitung (12) liegende Drossel (27) vorgesehen ist.

7. Druckwechselanlage nach Anspruch 6, d a d u r c h  g e k e n n z e i c h n e t ,  daß für die Erzeugung des Adsorptionsdruckes ein einstufiges Rootsgebläse (23) vorgesehen ist und daß die Drossel (27) so eingestellt ist, daß ein Adsorptionsdruck von ca. 1,8 bar erzeugt und aufrechterhalten wird.

8. Druckwechselanlage nach einem der Ansprüche 4 bis 7, d a d u r c h  g e k e n n z e i c h n e t ,  daß zur Erzeugung des Desorptionsdruckes eine zweistufige Rootspumpe (31, 34) vorgesehen ist.

9. Druckwechselanlage nach Anspruch 8, d a d u r c h  g e k e n n z e i c h n e t ,  daß der - bezogen auf die Strömungsrichtung der geförderten Gase - ersten Stufe (31) der Rootspumpe eine Kühleinrichtung (32)

- 9 -

0082948

nachgeordnet ist und daß eine einen Teil der gekühlten Gase zur ersten Stufe zurückführende Leitung (36) vorgesehen ist (voreinlaßgekühlter Betrieb).

10. Druckwechselanlage nach Anspruch 9, d a d u r c h g e k e n n z e i c h n e t , daß der zweiten Stufe (34) Kühlluft aus der Atmosphäre zum voreinlaßgekühlten Betrieb zugeführt wird.

11. Druckwechselanlage nach Anspruch 8, 9 oder 10, d a d u r c h g e k e n n z e i c h n e t , daß der ersten Stufe (31) ein bei zu hohem Ansaugdruck öffnendes Überströmventil (43) vorgelagert ist.

12. Druckwechselanlage nach einem der Ansprüche 8 bis 11, d a d u r c h g e k e n n z e i c h n e t , daß eine die erste Stufe (31) der Rootspumpe mit der Austrittsseite der zweiten Stufe (34) kurzschließende Leitung (37) mit einem weiteren Überströmventil (38) vorgesehen ist.

Stickstoff Produkt

Sauerstoffreiche Fraktion

Luft-Einlaß

-1/1-

0082948

81.034

0082948

Nummer der Anmeldung

EP 82 11 0564

# Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | B 01 D 53/04 |
| X | EP-A-0 038 410 (LEYBOLD-HERAEUS) * Ansprüche 1-3 * | 1 | C 01 B 21/04 |
| | --- | | |
| D,A | DE-C-1 544 152 (T. TAMURA) | | |
| | --- | | |
| D,A | DE-C-2 441 447 (BERGWERKSVERBAND GMBH) | | |
| | --- | | |
| A | US-A-3 338 030 (G.F. FELDBAUER) | | |
| | --- | | |
| A | LUEGER "Lexikon der Technik", Band 7, 1965, 4. Auflage, DEUTSCHE VERLAGS-ANSTALT, Stuttgart, Seiten 216-217 | | RECHERCHIERTE SACHGEBIETE (Int. Cl. ³) |
| | --- | | |
| A | LUEGER "Lexikon der Technik", Band 15, 1965, 4. Auflage, DEUTSCHE VERLAGS-ANSTALT, Stuttgart, Seite 274 | | B 01 D 53/00 C 01 B 21/00 B 01 J 19/00 F 04 C 2/00 F 04 C 18/00 |
| | ----- | | |

Der vorliegende Recherchenbericht wurde für alle Patentansprüche erstellt

| Recherchenort BERLIN | Abschlußdatum der Recherche 21-02-1983 | Prüfer KESTEN W |
|---|---|---|